# EUROPEAN PATENT APPLICATION

(11) **EP 1 067 656 A2**
(43) Date of publication of application: **10.01.2001**
(21) Application number: 00113200.0
(22) Date of filing: 03.07.2000
(51) Int. Cl.: H02K 1/27

(54) **Brushless electric motor with permanent magnets inside the rotor and electronic power supply and driver thereof**

(30) Priority: 07.07.1999 IT PD990153
(71) Applicant: LAFERT S.P.A., 30027 San Dona' di Piave,(Prov. of Venezia) (IT)
(72) Inventor: Novello, Andrea, 35100 Padova (IT)
(74) Representative: Modiano, Guido, Dr.-Ing.

(57) **Abstract**

A brushless motor in which the rotor (2) is divided into four quadrants, each having at least one recess (9,10) whose central region is arranged at 45° with respect to the axes along which the quadrant is ideally defined; a permanent magnet (15,19) shaped like a parallelepiped being inserted within the region of the recess (9, 10).

## Description

The present invention relates to a brushless electric motor with permanent magnets inside the rotor, suitable for being used in electric vehicles and particularly in electric scooters.

The invention also relates to the electronic device for driving said motor.

Currently many electric motors for vehicles suffer consumption problems due to their inherent structure and to their driving and control systems.

With the available energy sources (rechargeable batteries of various kinds) it is quite important to reduce consumption in order to have a greater range.

The aim of the present invention is to provide an electric motor, particularly suitable for being used in vehicles, having a high efficiency and allowing a good performance for the vehicle in which it is used.

An object of the present invention is to provide a motor for vehicles having low consumption which allows a good range for said vehicle.

A further object is to provide an electric motor which has limited dimensions and weight.

A further object is to provide an electric motor for vehicles with a driver which allows to optimize its performance.

A further object is to provide an electric motor for vehicles having a low cost.

These and other objects which will become better apparent hereinafter are achieved by a brushless electric motor with permanent magnets inside the rotor, comprising a rotor made of ferromagnetic material inserted in a ferromagnetic stator, said rotor and said stator being separated by a gap, characterized in that the rotor has, in cross-section, four quadrants which cover 90° each and are arranged symmetrically with respect to two mutually perpendicular geometric axes which pass through the center of the rotor, at least one recess being provided in each quadrant, said recess having two identical lateral regions which are substantially parallel to said perpendicular axes and are connected by a region arranged at 45° with respect to said perpendicular axes, a permanent magnet being arranged in said region.

Further characteristics and advantages of the present invention will become better apparent from the detailed description of a preferred embodiment, illustrated only by way of non-limitative example in the accompanying drawings, wherein:
Figure 1 is a sectional view of the motor, illustrating the rotor in particular;
Figure 2 is an enlarged-scale sectional view of a quarter of the rotor;
Figure 3 is a block diagram of the motor power supply.

With reference to the above figures, the motor according to the invention is composed of a stator 1 inside which a rotor 2 revolves as usual.

As regards the stator 1, the stator recesses 3 which contain the stator windings 4 are shown, and the reference numeral 5 designates the gap that separates the stator 1 from the rotor 2.

The rotor 2, in the illustrated case, has four regions or four quadrants which are substantially identical and in which recesses are located which will be described hereinafter with the aid of reference numerals.

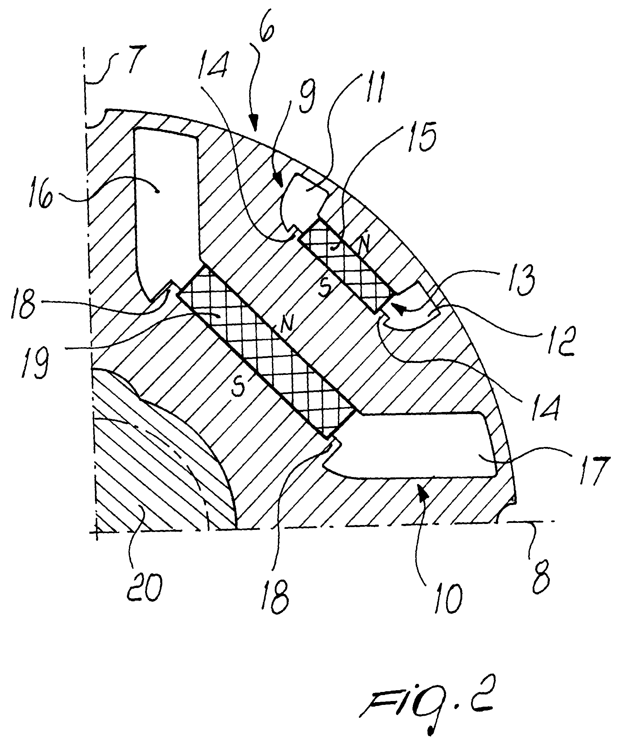

With reference to Figure 2, which illustrates one of the four rotor quadrants formed by a first axis of symmetry 7 which is perpendicular to a second axis of symmetry 8, in the illustrated case there are two recesses, termed outer rotor recess 9 and inner rotor recess 10.

The outer rotor recess 9 is formed by three regions: two outer ones, designated by the reference numerals 11 and 12, are almost parallel to the axes of symmetry 7 and 8, while the central region is inclined at 45% to said axes.

In this region, abutment protrusions 14 define a compartment in which a permanent magnet 15 is inserted; the magnet has an elongated rectangular cross-section with poles N and S arranged, as shown, along the longer sides of the cross-section of the magnet 15.

Likewise, the inner recess 10 of the rotor has two end regions, designated by the reference numerals 16 and 17 respectively, which are substantially parallel to the first axis of symmetry 7 and to the second axis of symmetry 8, respectively.

In a central region, abutments, now designated by the reference numerals 18, define a compartment for accommodating a permanent magnet 19 which has an elongated rectangular cross-section and poles N and S arranged as in the preceding magnet 15.

The same figure also shows the rotor shaft, designated by the reference numeral 20.

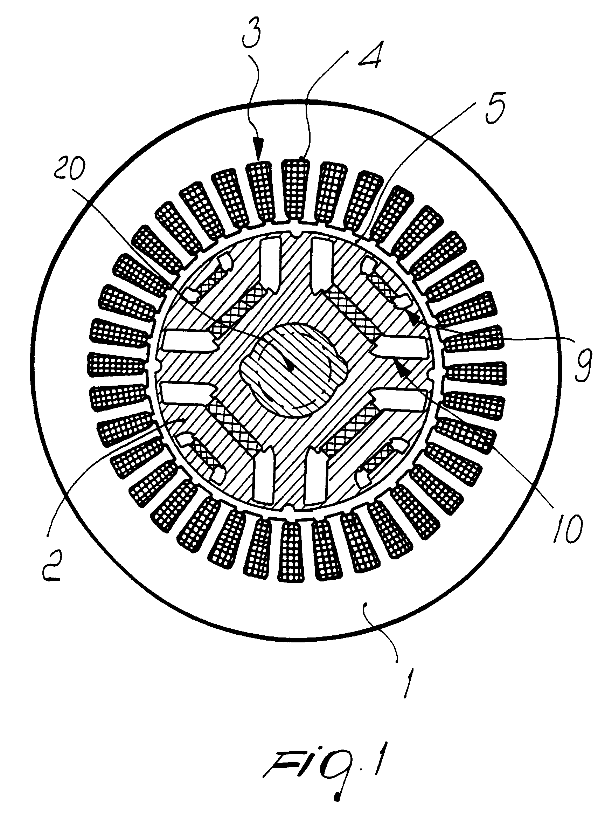

The quadrant shown in Figure 2 is repeated substantially identically for the other three quadrants, as shown in Figure 1, the only variation being that the N and S poles of the magnets are swapped in adjacent quadrants.

In the illustrated figures, for each quadrant there are two recesses, an outer one and an inner one, but the same concept can be applied to a rotor which has at least one recess; however, the rotor can also have even more than two recesses, which have in any case the same shape and arrangement.

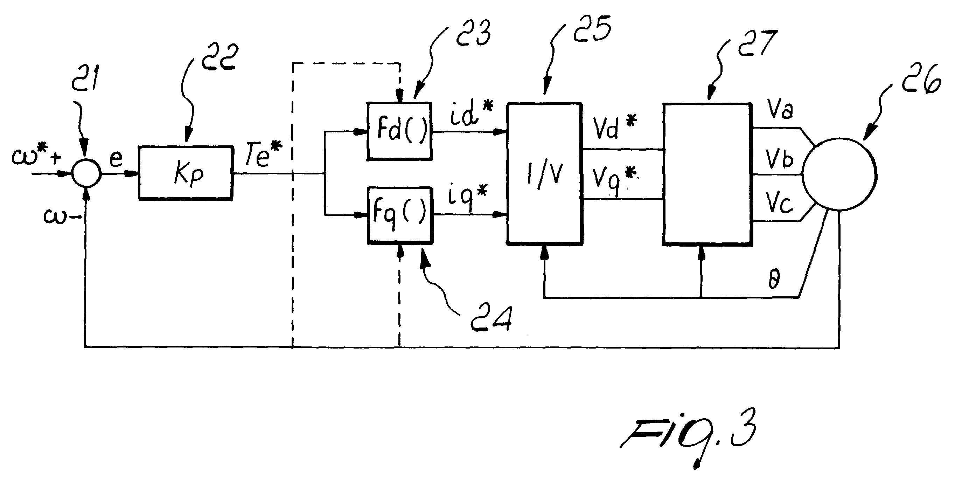

Figure 3 is a block diagram for optimizing the efficiency of the motor with internal permanent magnets used in electric traction.

As regards the symbols, they are to be interpreted as follows:
- Variables marked with *: = reference value
- Variables without *: = physical variables
- ω: = motor speed
- Tₑ: = reference torque
- I_{d}: = direct-axis current
- e: = speed error

As regards the blocks, their meaning is as follows:
- ○: = Block in which the difference between reference speed and actual speed is read;
- Kₚ: = Block which converts the reference speed error into a torque reference;
- F_{d}() F_{q}(): = Tables which, as a function of the required torque and of the measured speed, yield a value defined by the direct-axis currents and quadrature currents, so as to optimize the efficiency of the system;
- I/V: = Converts the current reference into a voltage reference, taking into account the electrical parameters of the motor.

As shown, a table system is used which is divided into n ranges of rotation rates, in which f_{d}(Te*) and f_{q}(Te*) yield the values of the current I_{d} and I_{q} which optimize the efficiency of the system for each range of rotation rates and for each torque value.

Substantially, the difference between the reference speed and ω* with reference to the actual speed ω of the motor is read in the block 21.

The error e detected by the block 21 is converted by the block 22 into a torque reference Te*.

Value Te* is processed in the blocks 23 and 24 which, by means of tables which reside therein, determine a definite value of the direct-axis and quadrature-axis currents so as to optimize the efficiency of the system according to the required torque and the measured speed.

The currents id* and iq* processed by the blocks 23 and 24 are converted into a voltage reference by the block 25, which takes into account the electrical parameters of the motor 26.

A vector transformer 27 converts the direct-axis and quadrature-axis voltage references into the voltages Va, Vb and Vc on the phases of the motor.

This simple and robust system allows true parametric optimization of the overall system constituted by the power supply battery, the drive and the motor.

A motor of this type, combined with a power supply and drive system such as the one described, is particularly suitable for being used in the electric traction of vehicles, in which optimization of efficiency and consumption is important.

From the above description and the drawings it is evident that the intended aim and all the objects have been achieved, and that in particular an electronically controlled motor of the brushless type has been provided which is well suited for use in the field of electric traction.

Starting from the same inventive concept, the configurations may of course differ also in relation to the selected components.

Accordingly, the dimensions and the materials may be any according to requirements and convenience.

The disclosures in Italian Patent Application No. PD99A000153 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A brushless electric motor with permanent magnets inside the rotor, comprising a rotor made of ferromagnetic material inserted in a ferromagnetic stator, said rotor and said stator being separated by a gap, characterized in that the rotor has, in cross-section, four quadrants which cover 90° each and are arranged symmetrically with respect to two mutually perpendicular geometric axes which pass through the geometric center of the rotor, at least one recess being provided in each quadrant, said recess being constituted by two identical lateral regions which are substantially parallel to said perpendicular axes and are connected by a region arranged at 45° with respect to said perpendicular axes, a permanent magnet being arranged in said region.

2. The electric motor according to claim 1, characterized in that said four quadrants are identical, said recess having a longitudinal parallelepiped-like compartment which is parallel to the axis of the rotor, the permanent magnet being inserted and locked in said compartment.

3. The electric motor according to claims 1 and 2, characterized in that said magnet has a rectangular cross-section, with longer sides arranged along the central axis of the region of the recess that lies at 45° to the perpendicular reference axes, the two poles N and S of the magnet being provided on said longer sides.

4. The electric motor according to claim 1, characterized in that said permanent magnet has a polarity which is reversed in one quadrant with respect to the polarity of a permanent magnet of an adjacent quadrant.

5. An electric drive for a brushless motor, characterized in that it comprises in combination: a first block, which reads a difference between a reference speed and a real instantaneous speed of the rotor and creates an error signal; a second block, which converts an error signal of the reference speed into a torque reference; two third blocks which contain tables which reside therein and which, as a function of the required torque and of the measured speed, define the value of direct-axis and quadrature-axis currents; a fourth block, which converts the current references of the preceding blocks into voltage references as a function of electrical parameters of the motor; and a fifth block, being constituted by a vector transformer which converts said voltage references into voltage on the phases of the motor.

6. The electronic drive according to claim 5, characterized in that it comprises, in said third blocks, a table system which is divided into n ranges of rotation rates which determine the values of the direct-axis and quadrature-axis currents for each range of rotation rates and for each torque value.
